# EUROPEAN PATENT SPECIFICATION

(11) **EP 3 339 180 B1**
(45) Date of publication and mention of the grant of the patent: **26.08.2020**
(21) Application number: 16382623.3
(22) Date of filing: 20.12.2016
(51) Int. Cl.: B64D 27/14, B64D 27/26

(54) **ROTATIONAL PROPULSION SYSTEM OF AN AIRCRAFT**
ROTATIONSANTRIEBSSYSTEM EINES FLUGZEUGS
SYSTÈME ROTATIF DE PROPULSION D'AÉRONEF

(43) Date of publication of application: 27.06.2018
(73) Proprietor: Airbus Operations, S.L., 28906 Getafe Madrid (ES)
(72) Inventor: MARTINO GONZÁLEZ, Esteban, 28906 Getafe (ES); MARTÍNEZ MUÑOZ, José Luis, 28906 Getafe (ES)
(74) Representative: Elzaburu S.L.P.

(56) References cited:
- EP-A1- 0 429 100
- EP-A1- 3 009 345
- EP-A2- 2 234 885
- EP-A2- 2 562 082
- WO-A1-2012/011996
- FR-A1- 2 869 589
- FR-A1- 2 942 772
- FR-A1- 2 986 504
- FR-A1- 3 020 338
- US-A1- 2014 021 292
- US-A1- 2016 046 381

## Description

### FIELD OF THE INVENTION

The invention is related to the integration of a rotational propulsion system into an aircraft.

### BACKGROUND OF THE INVENTION

It is well known that the propulsion systems of an aircraft produce thrust by accelerating the surrounding air on a pushing direction.

It is also well known that in order to increase the propulsion efficiency it is necessary to reduce the final velocity of the accelerated air.

The most common propulsion system for modern civilian airplanes is the so called Turbofan, which is a turbojet engine characterised by a central gas generator or engine core surrounded by a casing and an internal nacelle, that drives a bypass fan, surrounded by a fan casing and external nacelle.

The central gas generator is driven by a primary flow traveling inside its casing that contains at least a compressor, a combustion chamber and a turbine. This primary flow is characterized by a reduced amount of air mass flow that is significantly accelerated to a very high velocity when it is released at the exhaust, so its propulsive efficiency is low.

The central gas generator drives a shaft joined to a bypass fan that generates a secondary flow travelling between the internal nacelle, surrounding the engine core casing, and the external nacelle, surrounding the fan. This secondary flow is characterized by a large amount of air mass flow that is accelerated to a final velocity much lower that the primary flow, so its propulsive efficiency is much higher.

The external nacelle upstream of the fan defines the adequate profile section so that flow reaches the fan in the optimal conditions. At the fan location, it includes a fan casing that contains the blades, such that in case of release of the blade, the casing avoids that the blade impacts the aircraft. Downstream from the fan, the external and internal nacelle provides the adequate duct geometry for the nozzle to achieve an optimal expansion of the secondary flow. Also in some cases the external nacelle has an engine supporting function and the engine core is partially attached to it and it transmits part of the loads from the engine to the rest of the aircraft.

Also downstream of the fan, there are guiding vanes that are structural elements that support the external nacelle and joint it to the engine core casing. They also act as profiles that redirect the tangential velocity of the flow induced by the fan to maximize the efficiency.

In order to increase the efficiency of this kind of engine, the tendency is to increase the amount of secondary flow compared to the primary flow so that the resulting average velocity increase of the flow is lower. The flow rate between the secondary and the primary flow is called bypass ratio that is greater than 5 and can reach around 10 to 15 for the most efficient engines.

In order to reach these levels of bypass ratio and still meet the thrust requirements, for the different operation conditions of the aircraft, the fan diameters needs to be increased significantly compared to the engine core diameter. This increases the external nacelle diameter, producing significant increase of weight and drag penalty on this component, and reducing or even eliminating the propulsive efficiency improvement.

Also the relative reduction of the engine core section, compared to the bigger fan, produces a reduction on its bending stiffness. As a consequence, larger ovalisation deformations on the engine core can appear at operation that makes necessary to increase the rotors blade tip clearances to avoid interferences. This increase of tip clearance reduces the tightness between compressors and turbine stages and cuts down their efficiency, affecting significantly to the overall propulsion efficiency.

The increase of fan diameter also affects the engine integration with the aircraft, as larger fans produces larger offsets between the engine attachments at the engine core casing and the aircraft attaching structure as the fuselage, producing larger bending moments that require a larger and heavier cantilever box called pylon to perform the junction between those attachments.

As a consequence, the pylon enters the nacelle and the annular section of the secondary flow, so it needs to be surrounded by an aerodynamic profile that also produces higher drag penalty as it becomes bigger so as to allocate a larger pylon box inside.

On conventional attachment concepts, torsion momentum, along the longitudinal axis of the engine, is reacted on the rear of the engine core casing, at the turbine position. In order to react this moment, it is required a separation of two substantially parallel reaction loads to generate a pair of forces. This separation is made by means of a significant wide attaching fitting, to avoid large pinching loads deforming the casing. As a consequence, the pylon profile and pylon attaching fittings fairing produce a non-negligible interference and shadowing of the secondary flow, reducing its effective section and penalizing significant propulsive efficiency. The increase of pylon box due to larger fans and offset to the aircraft attaching structure will increase this penalization.

Document US8844861 proposes solutions to solve such problems by means of an aircraft propulsion system including a bypass turbojet engine surrounded by a nacelle together with a mechanism attaching the engine to a pylon of an aircraft. The nacelle includes an inner structure forming a body of revolution including a rigid framework formed by an upstream annular frame fastened to an intermediate casing of the engine, a downstream annular frame supporting the exhaust casing of the engine and longitudinal arms connecting the frames together, the annular downstream frame being fastened to the pylon by a flexible or hinged suspension mechanism.

The proposed idea could solve some of the mentioned problems but still has the drawback that the depicted body of revolution and attaching means will imply significant weight penalty and will require a significant space allocation, increase the inner core diameter that will reduce significantly secondary flow annular effective section, requiring a non-desirable increase of annular section and fan diameter.

An alternative Turbofan integration is called boundary layer ingestion (BLI) in which the nacelle is partially buried on the airframe external surface so that the boundary layer of the aircraft components as the fuselage, wing, etc..., depending on the aircraft configuration, is ingested by the engine. This boundary layer has the characteristic of having a lower speed than the surrounding air due to the friction with the aircraft surfaces, so that for a given required increase of flow momentum and thrust, the final resulting velocity of the pushing flow is lower. This allows an improved propulsion efficiency of the engine that takes advantage of the integration with the aircraft.

For this configuration, part of the nacelle is replaced by the available aircraft structure and surface, so there is less penalty weight and drag generated when the fan diameter are increased. The increase of diameter affects only to a partial nacelle. This configuration has the same problems already mentioned on conventional Turbofan due to the pylon that has equivalent characteristics and drawbacks. Also the vane profiles placed after the fan are present in this configuration to perform the same function as for conventional Turbofans.

Other common propulsion systems are the open rotor engine or turbo propeller engine that operates on the same principle of having a central gas generator that drives a bypass fan or propeller, but in this case the nacelle surrounds only the central gas generator core casing with the primary flow and there is not external nacelle surrounding the fan or propeller module with the secondary flow. This allows the use of larger fan blades whose diameter is independent from external nacelle diameter and thereby improves propulsive efficiency over conventional Turbofan engine designs without increasing the penalty on the external nacelle drag and weight.

Optimum performance has been found with a counter rotatory open rotor design, that has a propeller provided by two contra-rotating rotor assemblies, each rotor assembly carrying an array of aerofoil blades located outside the engine core casing, rotating on opposite directions. The first rotor assembly increases the momentum of the working flow on a first step and the second rotor assembly on the second step. The second rotor assembly also imparts a change in tangential velocity of the working fluid coming out of the first rotor, redirecting this tangent velocity into longitudinal pushing direction, improving even more the efficiency.

It is also known document CA2887262 that discloses an open rotor propulsion system making use of a single rotating propeller assembly analogous to a traditional bypass fan which reduces the complexity of the design, yet yields a level of propulsive efficiency comparable to contra-rotating propulsion designs.

More specifically, the document discloses a rotating element with an axis of rotation and a stationary element. The rotating element includes a plurality of blades, and the stationary element has a plurality of vanes configured to impart a change in tangential velocity of the working fluid opposite to that imparted by the rotating element. Both, the vanes and the rotating blades have variable pitch.

In this case the vanes perform the same reorientation function as for the Turbofan configurations but they don't provide support to the external nacelle that is not present in this architecture.

As for conventional and BLI Turbofan, for the open rotor configurations the most conventional integration of this engines into the aircraft is provided by a large and heavy pylon box, attached to the engine gas generator core casing, with same mentioned offset from the airframe structure and associated significant drawbacks. On the open rotor configurations, as well as on the Turbofan BLI, the fan or propeller blades are very close to the aircraft structure, without the nacelle in between.

Same problematic occurs when the Fan or propeller Module with large fan or propeller diameters are driven by an electric, piston or other kind of engine instead of a central gas generator, that can be placed co-axially or not with the blade rotor. In the case of not been co-axil the engine can transmit the power to the rotor module by means of a shaft and a transmission, allowing to place the engine in a different component of the aircraft as the fuselage, wing, or others.

It is known document EP2562082 disclosing an aircraft propulsion system has a propulsive rotor assembly rotatable about an axis of rotation and comprising a plurality of blades and a rotationally fixed vane assembly located adjacent to the propulsive rotor assembly and arranged circumferentially around the axis of rotation. As airflow enters the propulsive rotor assembly, a portion of the airflow passes over the vane assembly which is configured to direct the airflow away from the rotor blades so as to reduce the relative velocity of the redirected airflow over the rotor blades. This results in a reduced tendency of the airflow through the propulsive rotor assembly to become choked. Furthermore, document EP2234885 discloses a configuration of propulsion engines for large civilian aircraft, and more particularly for aircraft incorporating a configuration of engines attached to the rear fuselage, which allows optimizing the engines in several flight situations, mainly during takeoff and cruising.

The present invention is addressed to the solution of said problems.

### SUMMARY OF THE INVENTION

As previously stated, several aircraft rotatory propulsion configurations are known, as the conventional Turbofan (TF), a boundary layer ingestion Turbofan (TF BLI) and open rotor or propeller (OR), contra rotatory open rotor (CROR) and alternative configuration disclosed in the document CA2887262 hereby called Unducted MonoFan (UMF). All those propulsion systems are characterised by a central gas generator core that contains at least a compressor, a combustion chamber and a turbine surrounded firstly by a central core casing and secondly by an internal nacelle, and it is driven by a primary flow traveling inside the casing. This central gas generator drives a bypass fan, ducted by an external nacelle for the TF architectures or drives a bypass unducted propeller, single for the OR counter rotating for the CROR, that generates a secondary flow that produces the most part of the thrust.

In all configurations, the most common integration to the aircraft structure is by means of a large structural box called pylon that is attached to the engine central core casing at one end and to the aircraft component at the other. Both end attachments are conventionally performed by isostatic or quasi-isostatic attachments to ease the assembly process.

As previously stated, it is known that the tendency is to increase the fan diameter that generates the secondary flow, in order to increase the propulsion efficiency. This increase of fan or propeller diameter increases the offset from the central gas generator core casing to the airframe structure that produces significant penalty on the pylon weight and aero drag.

It is common to most of that propulsion configurations, TF, TF BLI, and UMF, the presence of vanes downstream of the rotating fan or propeller for directing to the thrust direction the tangential velocity of the secondary flow produced by the fan or propeller, increasing the efficiency.

As previously stated, it is known an engine comprising a rotating element and a stationary element. Said rotating element having an axis of rotation along the engine longitudinal axis and a row of blades and said stationary element having a row of vanes configured to impart a change in the tangential velocity of the air opposite to that imparted by said rotating element. The vanes being attached to the engine core casing at one end.

The rotational propulsion system object of the invention is defined according to the appended independent claim 1, with further aspect defined according to its dependent claims. It comprises at least one of said vanes also attached to the fuselage of the aircraft at its other end as it comprises means for its attachment to the fuselage, such that the engine is partially supported by said vane and therefore the vanes, that are configured for non-rotating around the longitudinal axis of the engine and located in a position along the longitudinal axis of the engine different from the position in which the row of rotating blades is located, are used to support the engine to the structure of the airframe.

It is understood for this description that blades rotates around the longitudinal axis of the engine while vanes do not rotate around the longitudinal axis of the engine, although each one of them can indeed rotate around their own axis in order to achieve different pitch angles. Said pitch axis of each vane being close to the reference line of each vane which is the curve or line that intersects each profile section of the vane at their centroid.

Said integration system of the engine with the fuselage, meaning by fuselage also a wing, or the external nacelle, when the TF engine core is supported on it and it transmits part of the engine loads to the rest of the aircraft, or other airframe component at which the engine can be attached, takes some or all of the loads passing through the pylon on conventional configurations, that allows removing or reducing the section of the conventional pylon structure with the following main advantages:
- Remove or reduce associated weight and drag.
- Remove or reduce the section of the supporting structure inside the secondary flow annular section as the engine has support instead that from a large pylon which provides a wide interference and shadowing zone, from one or several vanes that are slimmer.
- Reduce the loads introduction into the fuselage or other airframe component at which the engine can be attached and the associated penalty weight.

Another advantage of having a vane attached to the fuselage is that a vibration damping system can be integrated at this attachment, allowing the use of lower temperature damping materials as elastomers, therefore simplifying the design at the engine side, where the space allocations are more limited and temperature constrains are much higher, and as a direct consequence, reducing the weight and complexity at the engine side.

An additional advantage of having a vane attached to the fuselage is that, having a pitchable vane, the pitch mechanism for said supporting vane and for the assembly of others vanes and/or rotating blades can be located at the airframe section side, therefore simplifying the design at the engine side, where the space allocations are more limited, and as a direct consequence, reducing the weight and complexity at the engine side.

Additional advantages are that the pitchable vane can be used to trim the aircraft, helping the HTP and the VTP and also as trust reversal to reduce the speed of the aircraft after landing.

### DESCRIPTION OF THE FIGURES

To complete the description and in order to provide for a better understanding of the invention, a set of drawings is provided. Said drawings form an integral part of the description and illustrate preferred embodiments of the invention. The drawings comprise the following figures.
Figure 1a shows a cross-sectional top view of a Turbofan and the pylon attaching said Turbofan to a fuselage of an aircraft according to the state of the art.
Figure 1b shows a rear view of a Turbofan and the pylon attaching said Turbofan to a fuselage of an aircraft according to the state of the art.
Figure 2 shows a top schematic view of a first embodiment of the invention having an open rotor with at least a vane attached to the fuselage, more specifically to the frame section in connection with the rear pressure bulkhead.
Figure 3 shows a front schematic view of a second embodiment of the invention having two vanes attached to the fuselage having a tangential configuration with respect to the fuselage and radial with respect to the engine core casing.
Figure 4 shows a front schematic view of a third embodiment of the invention having two vanes attached to the fuselage having the longitudinal axis of the vane a tangential configuration with respect to fuselage and an angle higher than 0º with respect to the radial direction of the engine casing.
Figure 5 shows a front schematic view of the second embodiment of the invention having two vanes attached to the fuselage having a tangential configuration with respect to the fuselage and radial with respect to the engine core casing and also comprising an additional rear vane for supporting the engine.
Figures 6a and 6b show a front schematic view of the third embodiment of the invention having two vanes attached to the fuselage having a tangential configuration with respect to the fuselage and an angle higher than 0º with respect to the radial direction of the engine casing.
Figure 7 shows a top schematic view of one embodiment of the attachment of a vane to the engine core casing having two attachment points to the engine core casing.
Figure 8 shows a schematic view of a longitudinal section of an embodiment showing a vane attached to the engine and a further rear vane for additionally supporting the engine.
Figure 9 shows a schematic view of an embodiment of a vane.
Figure 10 shows a plurality of cross schematic sections of different embodiments of the vane shown in figure 9.
Figure 11 shows a schematic view of an embodiment of the attachment of the vane to the engine side.
Figure 12 shows a schematic view of an embodiment of the attachment of the vane to the fuselage side.
Figure 13 shows cross schematic sections of the vane having a morphing and/or movable leading and trailing edge.
Figure 14 shows a cross schematic section of the vane having a pitched profile.
Figure 15 shows a front schematic view of an embodiment showing the actuation of the pitch mechanism of the supporting vanes from the fuselage side.
Figure 16 shows a front schematic view of an embodiment showing the entire assembly of vanes being actuated from the fuselage through the vane.

### DETAILED DESCRIPTION OF THE INVENTION

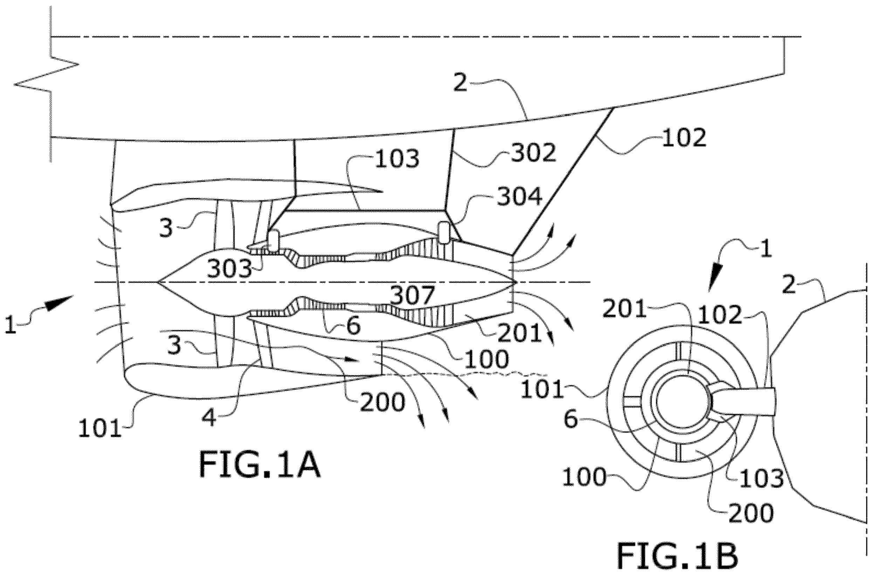

Figure 1a discloses a Turbofan engine (1), a pylon profile (102), a pylon attachment fairing (103), a pylon box (302), pylon front fittings (303) and pylon rear fittings (304), attaching said Turbofan engine (1) to the fuselage (2) of an aircraft according to the state of the art. The engine (1) comprises a row of rotating blades (3), a set of vanes (4), an engine core (307), an engine core casing (6), an internal nacelle (100), an external nacelle (101), a primary flow section (201) and a secondary flow section (200) according to the state of art.

Figure 1b discloses the same Turbofan engine (1), a pylon profile (102) and a pylon attachment fairing (103) attaching said Turbofan engine (1) to the fuselage (2) of an aircraft according to the state of the art. The engine (1) comprises an external nacelle (101), an internal nacelle (100), a primary flow section (201) and a secondary flow section (200) according to the state of art.

Figures 1a and 1b disclose the different components of the Turbofan engine (1) and its attachment means to the fuselage (2) according to the state of art. In particular, it can be seen the pylon box (302), the pylon profile (102) and pylon attaching fairing (103) and its interference with the secondary flow of the engine (1).

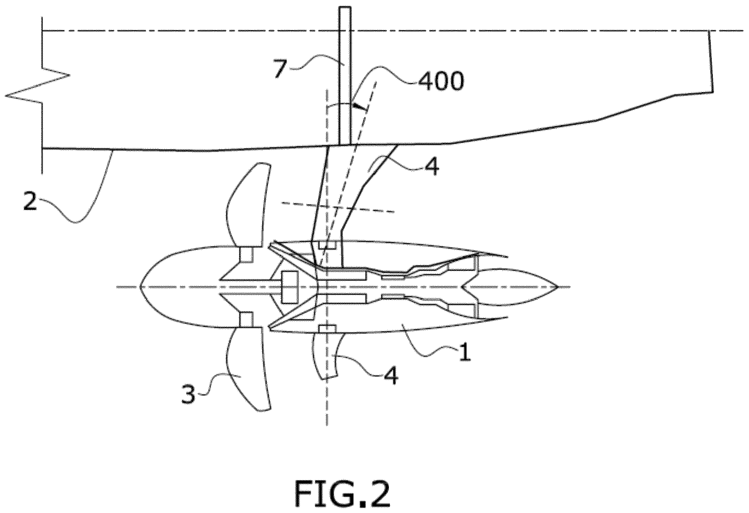

Figure 2 discloses an embodiment of the invention of an open rotor engine (1) integrated into the fuselage (2) of an aircraft. The engine (1) comprises:
- a row of rotating blades (3), and
- a row of vanes (4).

One of said vanes (4) is attached to the fuselage (2) of the aircraft such that the engine (1) is partially supported by said vane (4). Optionally, the vanes (4) could be attached to a section of the fuselage (2) in connection with the rear pressure bulkhead (7) for structural synergies.

As disclosed in Figure 2, the longitudinal axis of the vane (4) can have a sweep angle (400) with respect to the plane perpendicular to the engine longitudinal axis, higher than 0º, that allows increasing the orientation of the vane (4) on the thrust direction to better react this load into the fuselage (2). In fact, the longitudinal axis of the vane (4) configured for being attached to the fuselage (2) is located in a plane perpendicular to the engine axis although it could have a sweep angle (400) as previously stated. In the same way, in the disclosed embodiments it is shown the longitudinal axis of the vane (4) as a straight line although the longitudinal axis could be formed by a curved line instead of a straight line. Even in this case, said vane (4) having a curved longitudinal axis could rotate around the rotation axis of the vane (4), being the rotation axis different from the longitudinal axis.

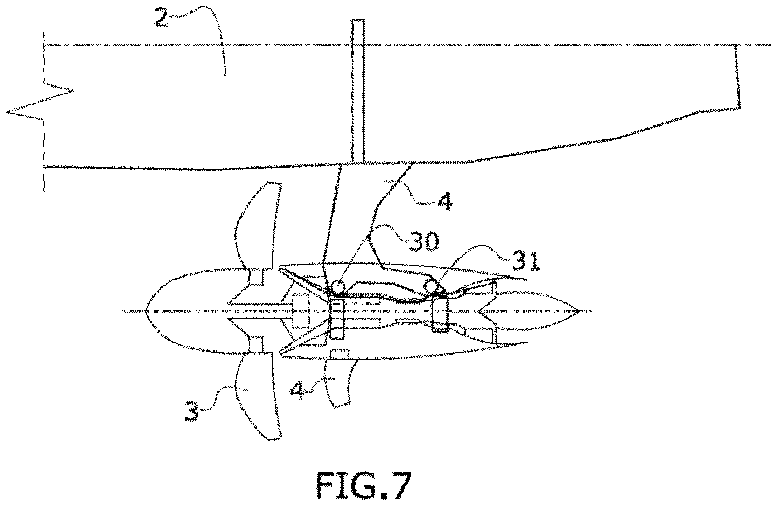

For having the possibility to better withstand moments perpendicular to the engine (1) longitudinal axis, the vane (4) configured to be attached to the fuselage (2) could comprise, as shown in Figure 7, two different attachments points (30, 31) to the engine core casing (6) being said two attachment points (30, 31) separated along the longitudinal axis of the engine (1).

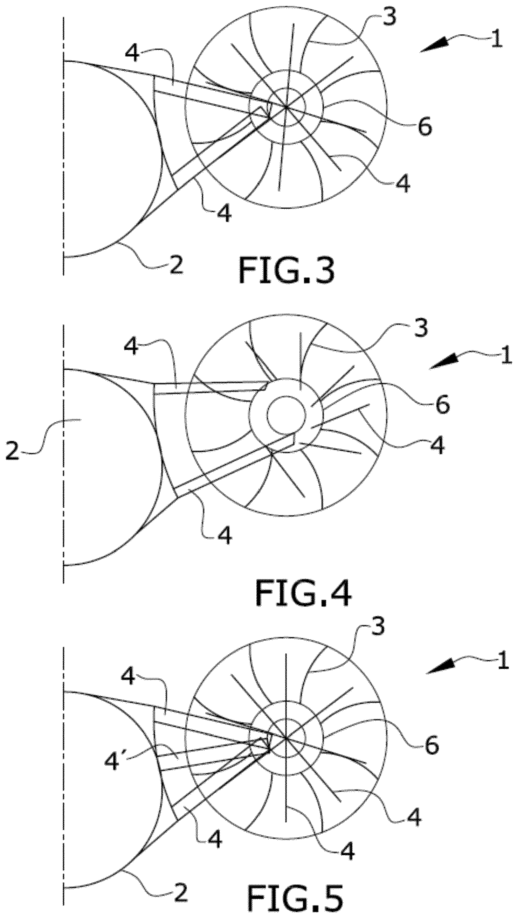

In the embodiment shown in Figure 3 the engine (1) is supported by two vanes (4) for better withstand moments in the longitudinal axis of the engine (1), or in a parallel axes to this one. This configuration has the advantage that at least one of the vanes (4) could have a vertical component able to react directly to the vertical loads on the engine (1), reducing the resulting moment bending loads at the fuselage (2) interface compared to the ones resulting on a single pylon box (302). Also as showed in Figure 3, the two vanes (4) are preferably positioned tangentially to the fuselage (2) that has the advantage of producing tangential loads at the fuselage (2) that are easier to react that the perpendicular loads. Also in this configuration, it is obtained the maximum possible arm between the two attachments at the fuselage (2), reducing the pinching loads at the fuselage (2). As a consequence of the two mentioned advantages, this configuration allows reducing the penalty weight at the vanes (4) and at the fuselage (2) interfaces.

In the embodiment shown in Figure 3 the vanes (4) are radially located with respect to the engine core casing (6), but other configurations are possible, for instance, having vanes (4) that are not fully radial with respect to the engine core casing (6) as it is disclosed in Figure 4, disclosing vanes (4) located in a partially tangential configuration with respect to the engine core casing (6), forming the longitudinal axis of the vane (4), at this location, an angle higher than 0º with respect to the radial direction of the engine casing (6). This configuration has the advantage that the vanes (4) are able to better react the moment in the longitudinal direction of the engine (1) at the engine (1) interface. This allows a larger distance between the vane (4) longitudinal axis and the engine (1) longitudinal axis that reduces the resulting pinching loads on the engine casing (6), reducing the penalty weight and space allocation for this interface, minimizing also the aerodynamic interference. Additionally, having the vanes (4) in a substantially tangential position allows a more progressive crossing with the rotating blades (3) that are mostly radial, smoothing their aerodynamic interactions and reducing the noise and vibrations problems.

Additionally, at least one of the vanes (4) could comprise an opposite angle sign compared with the other vane (4) with respect to the radial direction of the engine casing (6). This will allow a better load transmission, as depicted in Figure 4, such that the distance between the ends of two vanes (4) at the engine core casing (6) is wider if the angle sign is opposite and therefore there will be a larger level arm to react moments in the longitudinal axis of the engine (1) and therefore lower pinching loads, reducing the penalty weight and space allocation for this interface, minimizing also the aerodynamic interference.

As a summary, Figures 3 and 4 show embodiments having two vanes (4) attached to the engine core casing (6) in a radial configuration. Said configurations have the advantage that it is possible to take moments in the longitudinal direction of the engine (1) without driving the height and size of a single pylon box (302) and associated pylon profile (102). It can be reduced or even removed, minimising its penalty weight, aerodrag and also minimizing its interference with the secondary flow. As a result, it improves efficiency of the engine (1).

Additionally, or as an alternative to the above configuration, the rotational propulsion system can comprise at least one additional vane (4') located in a position along the longitudinal axis of the engine (1) different from the position in which the row of rotating blades (3) is located or in case that there is also a vane (4) or a row of vanes (4) in a position different from the position in which the row of vanes (4) are located.

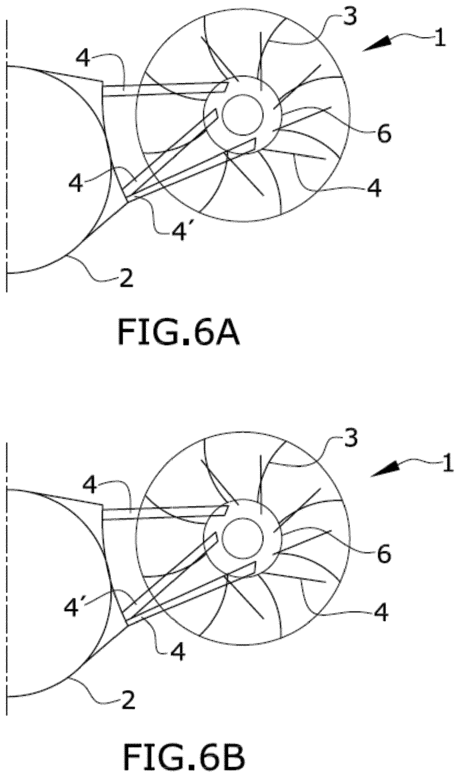

This configuration is shown in Figures 5, 6a and 6b, the additional vane (4') is configured for attaching the engine (1) to the fuselage (2). Said additional vane (4') attaches the engine (1) to the fuselage (2) at its rear part. An advantage of this configuration is that it allows a larger separation along the longitudinal axis at the engine (1) and at the fuselage (2) side between both vanes (4, 4'), so that the forces needed to react the moment perpendicular to the engine (1) longitudinal axis are smaller, reducing the penalty weight of the vanes (4, 4') and its interfaces. An additional advantage of said configuration is that the engine (1) is placed between both vanes (4, 4') therefore reducing cantilever and the bending on the engine (1) improving its performance.

Said additional vane (4') can be located on an intermediate engine radial location between two vanes (4) of the row of vanes (4) attached to the fuselage (2) as shown in Figure 5 or it can also be located on the same engine radial location aligned with one of the vanes (4), or can also be placed outside of the intermediate angle formed by the two vanes (4) of the row of vanes (4).

As an alternative, the additional vane (4') can be positioned preferably tangentially to the fuselage (2) and forming the longitudinal axis of the additional vane (4') an angle higher than 0º with respect to the radial direction of the engine core casing (6), allowing to better withstand also moments in the longitudinal direction of the engine (1) as can be seen in Figure 6a. As previously stated, as an alternative, the additional vane (4') could comprise an opposite angle sign with respect to the radial direction at the engine (1) side compared with the other vanes (4) also to better withstand moments in the longitudinal axis of the engine (1) as can be seen in Figure 6b.

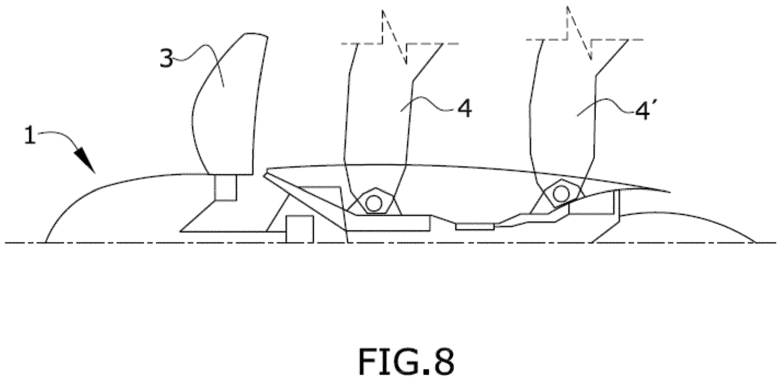

Figure 8 shows a vane (4) attached to the engine (1) and an additional vane (4') located in a position along the longitudinal axis of the engine (1) different from the position in which the row of rotating blades (3) and the vane (4) are located.

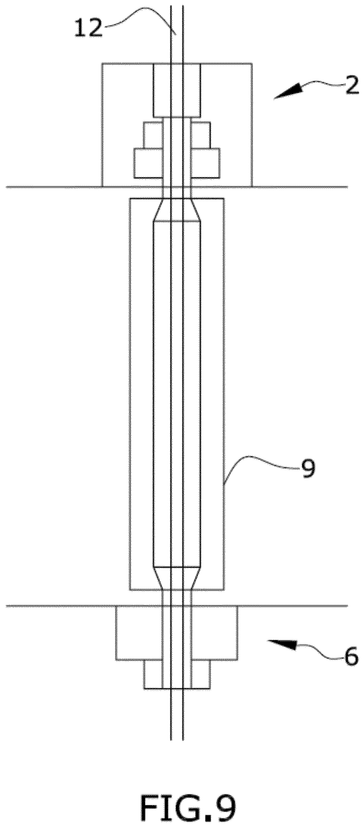

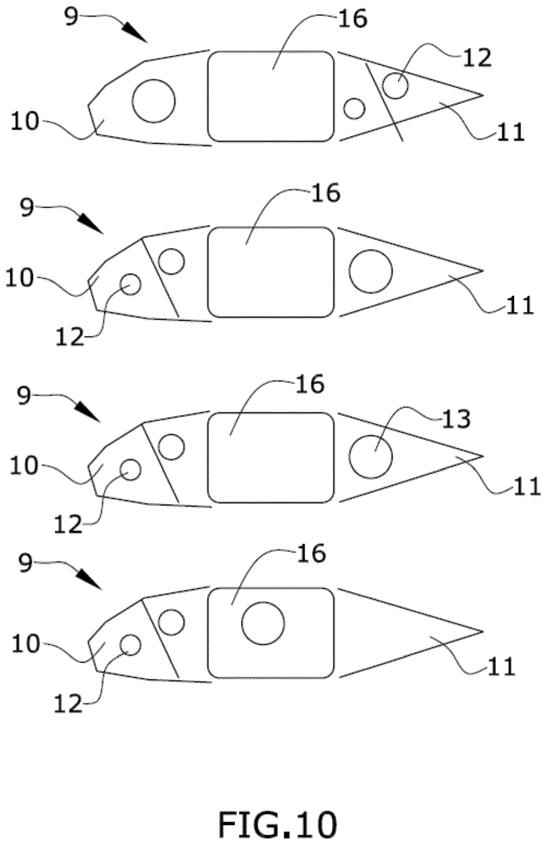

Figures 9 to 12 show different embodiments of the vane (4) configured to be attached to the fuselage (2). Said vane (4) comprises a central structural box (16), to which a leading edge (10) and a trailing edge (11) are attached forming an aerodynamic profile shape as can be seen in Figure 10. The central structural box (16) comprises at its ends means for its attachment to the engine (1) and to the fuselage (2) as can be seen in Figure 9.

Alternatively, the aerodynamic profile can be composed of a single structural box (16) forming directly the profile, without a separated trailing (11) or leading edge (10).

The vane (4) comprises means for routing (12) to engine (1) (fuel, electrical and even bleed duct). The vanes (4) comprise routing means (12) on the leading edge (10) or on the trailing edge (11) or even along the central box (16).

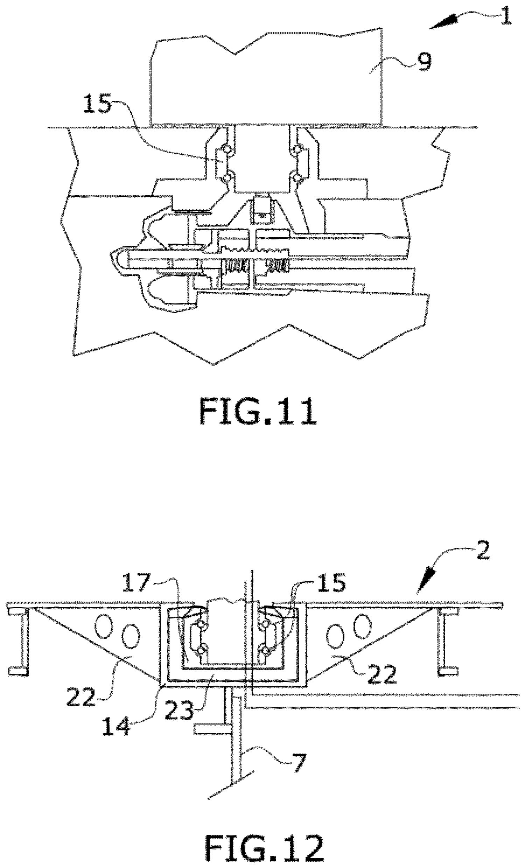

On one embodiment, the entire vane (4) can rotate around their longitudinal axis at its interface with the engine (1) and fuselage (2), as shown in Figure 11, by means of a pitch mechanism.

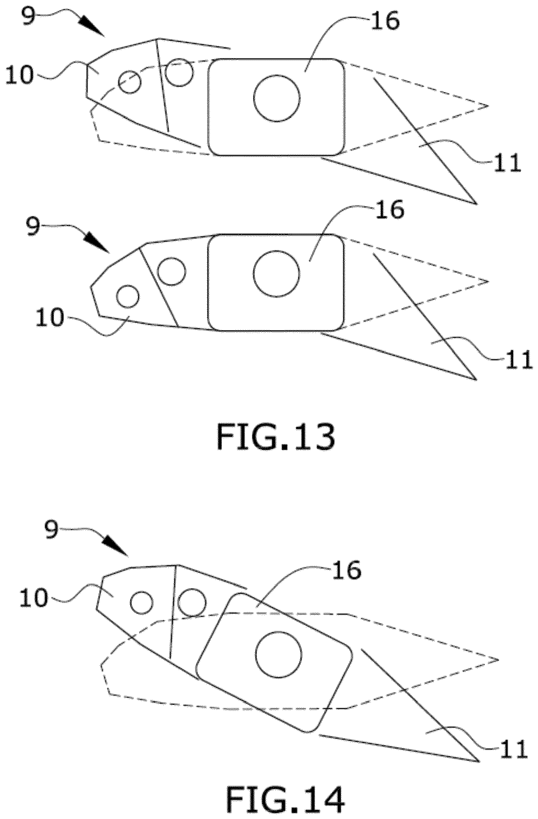

As an alternative, the vanes (4) can be fixed at the engine (1) and fuselage (2) interface. Only a part of the vane (4) profile can rotate as shown in Figure 13 to reorient the flow, by means of a movable or morphing mechanism. As another alternative, the full profile of the vane (4) can rotate on a partial length of the span between the fixed interfaces with the fuselage (2) and engine (1), by means of morphine rotation mechanisms or equivalent means, as shown in Figure 14.

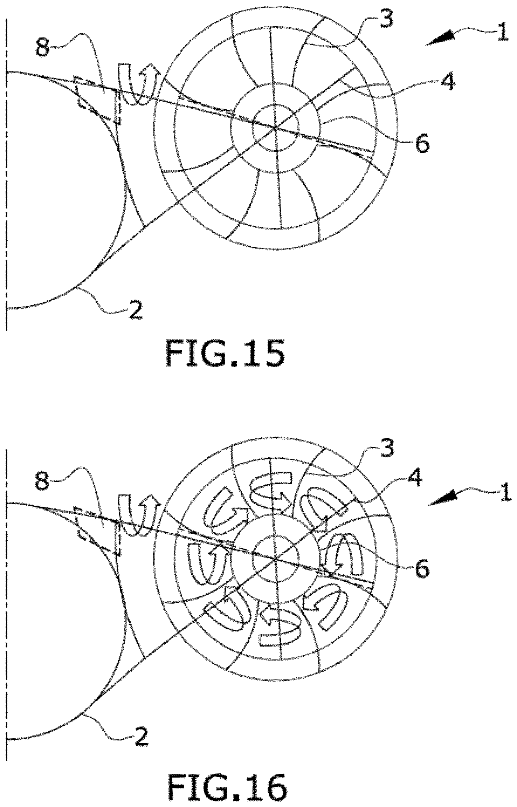

As the vane (4) is connected to the fuselage (2), it is possible to actuate the pitch (8), the movable or the morphing mechanism from the fuselage (2) side, instead of from the engine (1) side, as shown in Figure 15, and as a direct consequence, reducing the weight and complexity at the engine (1) side.

The entire assembly of vanes (4) can be actuated from the fuselage (2) by the static supporting vane (4) actuating from the fuselage (2) as shown in Figure 16 by suitable hydraulic, electric or other actuation devices. The rotation of the vane (4) can transmit at its time rotation to the other vanes (4) or blades (3) around their longitudinal axis by suitable transmission means as chains, rods, hydraulic circuits, etc., located inside the engine (1). Therefore the vane (4) configured for being attached to the fuselage (2) is configured for transmitting, for instance, as a shaft inside its profile, its rotation to a transmission means located inside the engine casing (6) that transmits rotation around their longitudinal axis to the other vanes (4) or rotating blades (3). As a direct consequence, the weight and complexity of the pitch mechanism at the engine (1) side is reduced.

As an alternative, a shaft can be placed inside the supporting vane profile instead of been the shaft directly formed by the profile of the supporting vane, in order to perform the same described function.

The vane (4) configured for being attached to the fuselage (2) comprises a pitch mechanism (8) able to rotate as suitable angle between 0º and +/-120º in other to also been able re-orient the flow in vertical or lateral direction when needed to help the empennages trim force or forward trust reversal direction to reduce the speed of the aircraft after landing.

At the engine (1) side, in the case that the entire vane (4) is able to rotate for variable pitch, its structural box (16) at both ends comprises a revolution section around its rotation axis. As the vane (4) has to accommodate tension, compression and bending loads, two bearings (15) in different longitudinal locations are integrated as it is depicted in Figure 11.

At the fuselage (2) side, in case that the entire vane (4) is able to vary its pitch angle, equivalent means are needed. A frame section is adapted for the vane (4) integration, an embodiment is depicted in Figure 12. The frame section comprises a blocking cavity (14) in which the bearings (15) are located. Additionally, intercostals (22) are added connecting the frame integrating the blocking cavity (14) with the adjacent frames for distributing the interface loads. Optionally, the frame with the blocking cavity (14) is also connected to the rear pressure bulkhead (7) in the inside, for loads distribution and structural synergies.

Finally, a damping material (23), for instance, an elastomeric one, can be added to the interior part of the blocking cavity (14) to act as soft mount and reduce the vibrations transmitted from the engine (1) to the aircraft. At the engine (1) side, integration of an elastomeric material is more complex due to said material does not withstand the high temperatures developed by the engine (1) and also because space restrictions at the engine (1) side. In this case, an additional blocking cavity (17) needs to be added to the assembly in contact with the bearings (15) so that the damping material (23) is placed between the blocking cavity (14) and the additional blocking cavity (17), so that assembly of vanes (4) and attaching means are isolated by the elastomer (23) from the rest of the structure to reduce the vibrations transmission.

At both sides of the vane (4), a more conventional fixed interface is provided when the entire vane (4) do not rotate around their span axis.

The invention is directly applicable to the integration of other rotatory propulsion as TF BLI, propellers, distributed propulsion or remote propulsion.

For Conventional TF applications the invention is also applicable considering that the vane (4) needs to cross also the external nacelle (101) before reaching the aircraft structure by means an air-tight opening for allowing the crossing of the vane (4) from the engine casing (6) to the fuselage (2). In this case, the vane (4) profile will be fixed on the portion outside of the external nacelle (101) and will rotate around its longitudinal axis, to reorient the flow at least at the secondary flow location, between the external nacelle (101) and the internal nacelle (100) of the engine (1).

Finally, the embodiments presented for this invention are applicable to the integrations of the engine (1) with the fuselage (2), but it is directly applicable also to the case in which the engine (1) is integrated into the wing or into the external nacelle, when the TF engine core is supported on it and it transmits part of the engine loads to the rest of the aircraft, or into other airframe component.

## Claims

1. Rotational propulsion system of an aircraft, comprising an engine (1) surrounded by an engine casing (6), the rotational propulsion system further comprising:
- a row of rotating blades (3) configured for rotating around the longitudinal axis of the engine (1), and
- at least one vane (4) configured for non-rotating around the longitudinal axis of the engine (1) located in a position along the longitudinal axis of the engine (1) different from the position in which the row of rotating blades (3) is located, being said vane (4) at one end attached to the engine casing (6),
- the vane (4) being configured for orienting the flow before or after the rotating blades (3) so that the resulting final flow is mostly aligned with the trust direction of the engine (1), said vane (4), at its other end, comprises means for its attachment to the fuselage (2) of the aircraft such that the engine (1) is configured for being at least partially supported by the fuselage (2) through said vane (4),
the vane (4) configured for being attached to the fuselage (2) comprising a pitch mechanism to reorient the flow, the pitch mechanism comprising an actuator configured to be located at the fuselage (2) side;
**characterised in that** the vane (4) configured for being attached to the fuselage (2) is configured for transmitting its rotation to a transmission means located inside the engine (1) that transmits rotation to other vanes (4) of a row of vanes (4) comprising said vane or to the blades (3) of the row of rotating blades (3) around their longitudinal axis.

2. Rotational propulsion system, according to claim 1, wherein the at least one vane (4) forms part of the row of vanes (4).

3. Rotational propulsion system, according to any preceding claim, wherein it comprises at least one additional vane (4') located in a position along the longitudinal axis of the engine (1) different from the position in which the row of rotating blades (3) and the vane (4) configured for being attached to the fuselage (2) are located, being the additional vane (4') attached to the engine casing (6) at one end and that comprises means for its attachment to the fuselage (2) to the other end for providing the engine (1) with the possibility to withstand moments perpendicular to the engine (1) longitudinal axis.

4. Rotational propulsion system, according to any preceding claim, wherein the longitudinal axis of the vane (4) configured for being attached to the fuselage (2) is located in a radial plane with respect to the engine casing (6).

5. Rotational propulsion system, according to any of preceding claims 1 to 3, comprising two vanes (4) configured for being attached to the fuselage (2) wherein at least the longitudinal axis of one of the vanes (4) configured for being attached to the fuselage (2) comprises at its attaching point to the engine casing (6) an opposite angle sign with respect to the radial direction of the casing (6) compared with the angle formed by the longitudinal axis of the other vane (4) configured for being attached to the fuselage (2) with respect to the radial direction of the engine (1) also at its own attaching point to the engine casing (6).

6. Rotational propulsion system, according to any preceding claim, wherein the at least one vane (4) configured for being attached to the fuselage (2) is configured for being located tangentially with respect to the fuselage (2) at its attaching point with the fuselage (2) or the longitudinal axis of the vane (4) is configured to form an angle different from 0º with respect to the radial direction of the fuselage (2) at its attaching point with the fuselage (2).

7. Rotational propulsion system, according to any preceding claim, wherein the at least one vane (4) configured for being attached to the fuselage (2) is configured for being attached to the rear pressure bulkhead (7) of the fuselage (2).

8. Rotational propulsion system, according to any preceding claim, wherein the at least one vane (4) configured for being attached to the fuselage (2) comprises two different attachments points (30, 31) to the engine casing (6) being said two attachment points (30, 31) separated along the longitudinal axis of the engine (1) for providing the engine (1) with the possibility to withstand moments perpendicular to the engine (1) longitudinal axis.

9. Rotational propulsion system, according to claim 1, wherein the whole vane (4) is movable around its rotation axis for varying its pitch angle or only a longitudinal part of the vane (4) is movable around its rotation axis or only its leading edge or trailing edge is movable along its rotation axis of the vane (4) for orienting the flow.

10. Rotational propulsion system, according to any preceding claim, wherein the at least one vane (4) configured for being attached to the fuselage (2) comprises a damping material (23) at its attachment to the fuselage (2) side to act as soft mount and reducing vibrations transmitted from the engine (1) to the aircraft.

11. Rotational propulsion system, according to claim 10, wherein the at least one vane (4) configured for being attached to the fuselage (2) comprises a first blocking cavity (14) configured for being located into the fuselage (2) and in which bearings (15) defining an axis of rotation for varying the pitch at one end of said vane (4) configured for being attached to the fuselage (2) are located and an additional blocking cavity (17) connectable to the fuselage (2) structure so that the damping material (23) is placed between the first blocking cavity (14) and the additional blocking cavity (17).

12. Rotational propulsion system, according to any preceding claim, wherein it comprises an external nacelle (101) surrounding the row of rotating blades (3) of the engine (1) and wherein said external nacelle (101) comprises an air-tight opening for allowing the crossing of the at least one vane (4) from the engine casing (6) to the fuselage (2).

13. Aircraft comprising a rotational propulsion system according to any preceding claim.

## Patentansprüche

1. Rotationsantriebssystem eines Flugzeugs, umfassend einen Motor (1), der von einer Motorverkleidung (6) umgeben ist, wobei das Rotationsantriebssystem ferner Folgendes umfasst:
- eine Reihe von rotierenden Laufschaufeln (3), die dazu ausgelegt sind, sich um die Längsachse des Motors (1) zu drehen, und
- wenigstens eine Leitschaufel (4), die dazu ausgelegt ist, sich nicht um die Längsachse des Motors (1) zu drehen, und sich an einer Position entlang der Längsachse des Motors (1) befindet, die sich von der Position unterscheidet, an der sich die Reihe von rotierenden Laufschaufeln (3) befindet, wobei die Leitschaufel (4) an einem Ende an der Motorverkleidung (6) angebracht ist,
- wobei die Leitschaufel (4) dazu ausgelegt ist, den Strom vor oder hinter den rotierenden Laufschaufeln (3) so auszurichten, dass der resultierende endgültige Strom zum großen Teil in einer Linie mit der Schubkraftrichtung des Motors (1) ausgerichtet ist, wobei die Leitschaufel (4) an ihrem anderen Ende auf eine solche Weise Mittel zu ihrer Anbringung an dem Rumpf (2) des Flugzeugs umfasst, dass der Motor (1) dazu ausgelegt ist, wenigstens zum Teil über die Leitschaufel (4) durch den Rumpf (2) gehalten zu sein, wobei die Leitschaufel (4) dazu ausgelegt ist, an dem Rumpf (2) angebracht zu sein und einen Nickmechanismus zum erneuten Ausrichten des Stroms umfasst, wobei der Nickmechanismus einen Antrieb umfasst, der dazu ausgelegt ist, sich auf der Seite des Rumpfes (2) zu befinden,
**dadurch gekennzeichnet, dass** die Leitschaufel (4), die dazu ausgelegt ist, an dem Rumpf (2) angebracht zu sein, dazu ausgelegt ist, ihre Drehung an ein Übertragungsmittel zu übertragen, das sich in dem Motor (1) befindet und eine Drehung an andere Leitschaufeln (4) einer die Leitschaufel umfassenden Reihe von Leitschaufeln (4) oder an die Laufschaufeln (3) der Reihe von rotierenden Laufschaufeln (3) um ihre Längsachse überträgt.

2. Rotationsantriebssystem nach Anspruch 1, wobei die wenigstens eine Leitschaufel (4) einen Teil der Reihe von Leitschaufeln (4) bildet.

3. Rotationsantriebssystem nach einem der vorhergehenden Ansprüche, wobei es wenigstens eine zusätzliche Leitschaufel (4') umfasst, die sich an einer Position entlang der Längsachse des Motors (1) befindet, die sich von der Position unterscheidet, an der sich die Reihe von rotierenden Laufschaufeln (3) und die Leitschaufel (4), die dazu ausgelegt ist, an dem Rumpf (2) befestigt zu sein, befinden, wobei die zusätzliche Leitschaufel (4') an einem Ende an der Motorverkleidung (6) angebracht ist und Mittel für ihre Anbringung an dem Rumpf (2) an dem anderen Ende umfasst, um dem Motor (1) die Möglichkeit zu geben, Momenten zu widerstehen, die senkrecht auf der Längsachse des Motors (1) stehen.

4. Rotationsantriebssystem nach einem der vorhergehenden Ansprüche, wobei sich die Längsachse der Leitschaufel (4), die dazu ausgelegt ist, an dem Rumpf (2) angebracht zu sein, in Bezug auf die Motorverkleidung (6) in einer radialen Ebene befindet.

5. Rotationsantriebssystem nach einem der vorhergehenden Ansprüche 1 bis 3, umfassend zwei Leitschaufeln (4), die dazu ausgelegt sind, an dem Rumpf (2) angebracht zu sein, wobei wenigstens die Längsachse einer der Leitschaufeln (4), die dazu ausgelegt sind, an dem Rumpf (2) angebracht zu sein, an ihrem Anbringungspunkt an der Motorverkleidung (6) ein Winkelzeichen in Bezug auf die radiale Richtung der Verkleidung (6) umfasst, das im Vergleich zu dem Winkel entgegengesetzt ist, der durch die Längsachse der anderen Leitschaufel (4) gebildet wird, die dazu ausgelegt ist, an dem Rumpf (2) in Bezug auf die radiale Richtung des Motors (1) ebenfalls an ihrem eigenen Anbringungspunkt an der Motorverkleidung (6) angebracht zu sein.

6. Rotationsantriebssystem nach einem der vorhergehenden Ansprüche, wobei die wenigstens eine Leitschaufel (4), die dazu ausgelegt ist, an dem Rumpf (2) angebracht zu sein, dazu ausgelegt ist, sich tangential in Bezug auf den Rumpf (2) an ihrem Anbringungspunkt an dem Rumpf (2) zu befinden, oder wobei die Längsachse der Leitschaufel (4) dazu ausgelegt ist, einen Winkel zu bilden, der sich in Bezug auf die radiale Richtung des Rumpfs (2) an ihrem Anbringungspunkt an dem Rumpf (2) von 0° unterscheidet.

7. Rotationsantriebssystem nach einem der vorhergehenden Ansprüche, wobei die wenigstens eine Leitschaufel (4), die dazu ausgelegt ist, an dem Rumpf (2) angebracht zu sein, dazu ausgelegt ist, an dem hinteren Druckschott (7) des Rumpfs (2) angebracht zu sein.

8. Rotationsantriebssystem nach einem der vorhergehenden Ansprüche, wobei die wenigstens eine Leitschaufel (4), die dazu ausgelegt ist, an dem Rumpf (2) angebracht zu sein, zwei unterschiedliche Anbringungspunkte (30, 31) an der Motorverkleidung (6) umfasst, wobei die zwei Anbringungspunkte (30, 31) entlang der Längsachse des Motors (1) getrennt sind, um dem Motor (1) die Möglichkeit zu geben, Momenten zu widerstehen, die senkrecht auf der Längsachse des Motors (1) stehen.

9. Rotationsantriebssystem nach Anspruch 1, wobei die gesamte Leitschaufel (4) um ihre Drehachse bewegbar ist, um ihren Nickwinkel zu ändern, oder wobei nur ein längs verlaufender Teil der Leitschaufel (4) um ihre Drehachse bewegbar ist oder wobei nur ihre Eintrittskante oder Austrittskante entlang der Drehachse der Leitschaufel (4) bewegbar ist, um den Strom auszurichten.

10. Rotationsantriebssystem nach einem der vorhergehenden Ansprüche, wobei die wenigstens eine Leitschaufel (4), die dazu ausgelegt ist, an dem Rumpf (2) angebracht zu sein, ein Dämpfungsmaterial (23) an ihrer Anbringung auf der Seite des Rumpfs (2) umfasst, um als weiche Halterung zu wirken und Vibrationen, die von dem Motor (1) zu dem Flugzeug übertragen werden, zu reduzieren.

11. Rotationsantriebssystem nach Anspruch 10, wobei die wenigstens eine Leitschaufel (4), die dazu ausgelegt ist, an dem Rumpf (2) angebracht zu sein, einen ersten Blockierhohlraum (14), der dazu ausgelegt ist, sich in dem Rumpf (2) zu befinden, und in dem sich Lager (15) befinden, die eine Drehachse zum Verändern des Nickwinkels an einem Ende der Leitschaufel (4), die dazu ausgelegt ist, an dem Rumpf (2) angebracht zu sein, definieren, und einen zusätzlichen Blockierhohlraum (17) umfasst, der mit der Struktur des Rumpfs (2) verbindbar ist, so dass das Dämpfungsmaterial (23) zwischen dem ersten Blockierhohlraum (14) und dem zusätzlichen Blockierhohlraum (17) platziert ist.

12. Rotationsantriebssystem nach einem der vorhergehenden Ansprüche, wobei es eine äußere Triebwerksgondel (101) umfasst, die die Reihe von rotierenden Laufschaufeln (3) des Motors (1) umgibt, und wobei die äußere Triebwerksgondel (101) eine luftdichte Öffnung umfasst, um das Überqueren der wenigstens einen Leitschaufel (4) von der Motorverkleidung (6) zu dem Rumpf (2) zu ermöglichen.

13. Flugzeug, umfassend ein Rotationsantriebssystem nach einem der vorhergehenden Ansprüche.

## Revendications

1. Système rotatif de propulsion d'un aéronef, comprenant un moteur (1) entouré par un carter réacteur (6), le système rotatif de propulsion comprenant en outre :
une rangée d'ailettes mobiles (3) conçues pour tourner autour de l'axe longitudinal du moteur (1), et
au moins une aube fixe (4) conçue pour ne pas tourner autour de l'axe longitudinal du moteur (1) située dans une position le long de l'axe longitudinal du moteur (1) différente de la position dans laquelle se trouve la rangée d'ailettes mobiles (3), ladite aube fixe (4) étant fixée au carter réacteur (6),
l'aube fixe (4) étant conçue pour orienter le flux avant ou après les ailettes mobiles (3) de façon que le flux final résultant soit principalement aligné sur la direction de poussée du moteur (1),
ladite aube fixe (4) comprenant à son autre extrémité des moyens permettant de la fixer au fuselage (2) de l'aéronef de sorte que le moteur (1) soit conçu pour être au moins en partie supporté par le fuselage (2) par l'intermédiaire de ladite aube fixe (4),
l'aube fixe (4) conçue pour être fixée au fuselage (2) comprenant un mécanisme d'assiette pour réorienter le flux, le mécanisme d'assiette comprenant un actionneur conçu pour être situé sur le côté du fuselage (2) ;
**caractérisé en ce que** l'aube fixe (4) conçue pour être fixée au fuselage (2) est conçue pour transmettre sa rotation à des moyens de transmission situés à l'intérieur du moteur (1), qui transmettent la rotation à d'autres aubes fixes (4) d'une rangée d'aubes fixes (4) comprenant ladite aube fixe ou aux ailettes (3) de la rangée d'ailettes mobiles (3) autour de leur axe longitudinal.

2. Système rotatif de propulsion selon la revendication 1, dans lequel l'au moins une aube fixe (4) fait partie de la rangée d'aubes fixes (4).

3. Système rotatif de propulsion selon l'une quelconque des revendications précédentes, comprenant au moins une aube fixe supplémentaire (4') située dans une position le long de l'axe longitudinal du moteur (1) différente de la position dans laquelle se trouvent la rangée d'ailettes mobiles (3) et l'aube fixe (4) conçue pour être fixée au fuselage (2), l'aube fixe supplémentaire (4') étant fixée au carter réacteur (6) à une extrémité et comprenant des moyens permettant de la fixer au fuselage (2) à l'autre extrémité pour fournir au moteur (1) la possibilité de supporter des moments perpendiculaires à l'axe longitudinal du moteur (1).

4. Système rotatif de propulsion selon l'une quelconque des revendications précédentes, l'axe longitudinal de l'aube fixe (4) conçue pour être fixée au fuselage (2) se trouvant dans un plan radial par rapport au carter réacteur (6).

5. Système rotatif de propulsion selon l'une quelconque des revendications précédentes 1 à 3, comprenant deux aubes fixes (4) conçues pour être fixées au fuselage (2), dans lequel au moins l'axe longitudinal de l'une des aubes fixes (4) conçues pour être fixées au fuselage (2) comprend à son point de fixation au carter réacteur (6) un signe d'angle opposé par rapport à la direction radiale du carter (6) en comparaison avec l'angle formé par l'axe longitudinal de l'autre aube fixe (4) conçue pour être fixée au fuselage (2) par rapport à la direction radiale du moteur (1) également à son point de fixation au carter réacteur (6).

6. Système rotatif de propulsion selon l'une quelconque des revendications précédentes, dans lequel l'au moins une aube fixe (4) conçue pour être fixée au fuselage (2) est conçue pour être située tangentiellement par rapport au fuselage (2) à son point de fixation au fuselage (2) ou l'axe longitudinal de l'aube fixe (4) est conçu pour former un angle différent de 0° par rapport à la direction radiale du fuselage (2) à son point de fixation au fuselage (2).

7. Système rotatif de propulsion selon l'une quelconque des revendications précédentes, dans lequel l'au moins une aube fixe (4) conçue pour être fixée au fuselage (2) est conçue pour être fixée à la cloison étanche arrière (7) du fuselage (2).

8. Système rotatif de propulsion selon l'une quelconque des revendications précédentes, dans lequel l'au moins une aube fixe (4) conçue pour être fixée au fuselage (2) comprend deux points de fixation différents (30, 31) au carter réacteur (6), lesdits deux points de fixation (30, 31) étant séparés le long de l'axe longitudinal du moteur (1) pour fournir au moteur (1) la possibilité de supporter des moments perpendiculaires à l'axe longitudinal du moteur (1).

9. Système rotatif de propulsion selon la revendication 1, dans lequel l'aube fixe entière (4) peut être déplacée autour de son axe de rotation pour faire varier son assiette longitudinale ou seulement une partie longitudinale de l'aube fixe (4) peut être déplacée autour de son axe de rotation ou seulement son bord d'attaque ou son bord de fuite le long de l'axe de rotation de l'aube fixe (4) pour orienter le flux.

10. Système rotatif de propulsion selon l'une quelconque des revendications précédentes, dans lequel l'au moins une aube fixe (4) conçue pour être fixée au fuselage (2) comprend un matériau d'amortissement (23) au niveau de sa fixation au côté du fuselage (2) pour jouer le rôle de socle de montage souple et réduire les vibrations transmises du moteur (1) à l'aéronef.

11. Système rotatif de propulsion selon la revendication 10, dans lequel l'au moins une aube fixe (4) conçue pour être fixée au fuselage (2) comprend une première cavité de blocage (14) conçue pour être située dans le fuselage (2) et dans lequel sont situés des paliers (15) définissant un axe de rotation pour faire varier l'assiette à une extrémité de ladite aube fixe (4) conçue pour être fixée au fuselage (2) et une cavité de blocage supplémentaire (17) pouvant être raccordée à la structure du fuselage (2) afin que le matériau d'amortissement (23) soit placé entre la première cavité de blocage (14) et la cavité de blocage supplémentaire (17) .

12. Système rotatif de propulsion selon l'une quelconque des revendications précédentes, comprenant une nacelle externe (101) entourant la rangée d'ailettes mobiles (3) du moteur (1) et dans lequel ladite nacelle externe (101) comprend une ouverture étanche à l'air pour permettre la traversée de l'au moins une aube fixe (4) du carter réacteur (6) au fuselage (2).

13. Aéronef comprenant un système rotatif de propulsion selon l'une quelconque des revendications précédentes.
